# EUROPEAN PATENT APPLICATION

(11) **EP 4 793 724 A1**
(43) Date of publication of application: **19.08.2026**
(21) Application number: 25157686.4
(22) Date of filing: 13.02.2025
(51) Int. Cl.: G05B 19/418, G06Q 10/0639, G06Q 10/067, G06Q 50/04

(54) **METHOD AND SYSTEM FOR AUTOMATIC GENERATION OF A STANDARDIZED ASSET MODEL AND MAPPING OF OPERATIONAL PARAMETERS OF AN ENGINEERING PROJECT TO AN APPLICATION**

(71) Applicant: Siemens Aktiengesellschaft, 80333 München (DE)
(72) Inventor: Bhattacharjee, Samrat, 560078 Bangalore, Karnataka (IN); Ethiraj, Paranthaman, 560076 Bengaluru, Karnataka (IN); Fusco, Francesco, 1130 Wien (AT); Mathew, Bony, 683542 Perumbavoor, Kerala (IN)
(74) Representative: Isarpatent

(57) **Abstract**

A method for automatically generating a standardized asset model and mapping operational parameters of an engineering project (100a) to an application (116) is disclosed. The method involves obtaining data from multiple sources, such as databases, documentation, or field devices, related to the engineering project (100a) using a processing unit (202). This data is converted into vector representations using a text embedding model. The processing unit (202) generates a prompt iteratively from these vectors, which is provided to an AI model (208) to generate the standardized asset model. This model includes information on the operational parameters of the engineering project (100a). Real-time operational parameters are continuously acquired from at least one controller (108) in the project (100a). The AI model (208) identifies key operational parameters influencing key performance indicators (KPIs) and maps these parameters in the standardized asset model to their equivalents in the application (116). Users can retrieve and display KPIs and operational parameters via the application (116), facilitating data-driven decision-making.

## Description

The present disclosure relates to optimizing industrial processes, and more particularly relates to a method and system for automatic generation of a standardized asset model and mapping of operational parameters of an engineering project to an application to enable data-driven decision making using the application.

Data analytics plays a pivotal role in modern industries by transforming raw data into actionable insights that drive decision-making and optimize operations. By leveraging advanced techniques such as machine learning, statistical modeling, and predictive analytics, industries can identify patterns, forecast trends, and make informed decisions in real-time. These capabilities enable businesses to streamline supply chains, improve production efficiency, personalize marketing strategies, and mitigate risks. The integration of data analytics into industry workflows represents a significant step toward achieving greater operational agility, accuracy, and scalability.

However, obtaining relevant data for analysis from an engineering project can be challenging. Typically, such projects generate thousands of data points representing various process parameters. These data points are recorded by industrial control systems, like SCADA, within the operational technology (OT) network, and are used to control the project's processes. Identifying key parameters from these systems often requires human expertise, where a skilled operator assists in pinpointing the key process parameters influencing the process.

Further, the key parameters that are identified by the human operator are used by the data analytics system to provide useful insights to optimize the processes of the engineering project. A human operator is necessary to identify the key parameters of the process required by the data analytics system because the way the process data is represented in the industrial control system is different from the how it is represented in the data analytics system. The human operator manually draws a correlation between the two systems and maps the data points accordingly since there is no standardized asset model for the engineering project.

Thus, there exists a need for a system and method that automatically generates a standardized asset model for an engineering project and maps the operational parameters of an engineering project to an application.

Therefore, it is an object of the present invention to provide a computer-implemented method for automatic generation of a standardized asset model and mapping of operational parameters of an engineering project to an application.

The term "engineering project" refers to any industrial system, manufacturing system, or similar undertaking that involves the design, development, implementation, or optimization of technical and engineering solutions to address specific objectives. An engineering project may include hardware equipment such as motors, robots, logical controllers, human machine interfaces, conveyor belts, and machine lathes. Further, the engineering project may comprise sensors and other sensory devices configured to measure operational parameters of the processes of the engineering project. As an example, an engineering project may be a cement manufacturing plant, glass manufacturing plant, so on and so forth.

The term "operational parameters" refers to the specific variables and conditions that are controlled, monitored, and adjusted to ensure the optimal performance, efficiency, and safety of a given process. These parameters can encompass a wide range of factors, depending on the industrial application. For example, in a chemical manufacturing process, operational parameters may include temperature, pressure, pH levels, flow rates of reactants, and concentrations of specific chemical species. In a machining process, operational parameters could involve cutting speed, feed rate, tool position, and spindle speed. Accurate control and adjustment of these parameters are crucial for maintaining product quality, maximizing throughput, minimizing waste, and ensuring compliance with safety and environmental regulations.

The term "key performance indicators (KPIs)" refers to the quantifiable metrics used to evaluate the efficiency, effectiveness, and success of various operational activities within an industrial setting. KPIs provide critical insights into the performance of processes, enabling managers and engineers to make informed decisions and drive continuous improvement. Examples of KPIs in industrial processes include production output, which measures the amount of product produced over a specific period; yield rate, which assesses the proportion of acceptable quality products produced relative to total production; energy consumption, which tracks the amount of energy used per unit of production; and downtime, which records the amount of time that equipment or processes are non-operational due to maintenance or unexpected failures. By monitoring these and other relevant KPIs, organizations can identify areas for improvement, optimize resource allocation, enhance product quality, and achieve strategic business objectives.

The term "application" may refer to a computer-executed program designed to perform specific functions within an industrial process control environment. Specifically, the application may encompass data analytics solution that collects, processes, and interprets data from various sensors and equipment to optimize operational efficiency, monitor performance, and predict maintenance needs. Examples of such applications include computer program that analyzes temperature and pressure data to ensure optimal functioning of a chemical reactor, a predictive maintenance tool that uses machine learning algorithms to forecast equipment failures in a manufacturing plant, and a real-time data visualization platform that provides actionable insights into the energy consumption patterns of an industrial facility. These applications facilitate informed decision-making by providing critical data insights, enhancing the overall productivity and safety of industrial operations.

The term "standardized asset model" refers to a data model that provides a comprehensive and uniform representation of the various physical and logical components within an industrial setup. This data model includes detailed specifications of machinery, equipment, control systems, and other assets, along with their interrelations and functional parameters. The standardized asset model serves as a foundational framework enabling consistent documentation, analysis, and management of industrial assets across different platforms and applications. For example, it may incorporate standardized data formats and schemas for representing sensor data, equipment status, and operational metrics, ensuring interoperability and seamless integration with data analytics tools, maintenance management systems, and other enterprise software.

The method for automatic generation of a standardized asset model and mapping of operational parameters of an engineering project to an application comprises obtaining, by a processing unit, data pertaining to the engineering project from multiple sources related to the engineering project, wherein the sources include at least a database, a documentation, or a field device.

In one embodiment, multiple sources from which the data pertaining to the engineering project is obtained includes documentation comprising information relating to the engineering project, sensors measuring real-time operational parameters of the engineering project, repository comprising historical data associated with the engineering project, predefined standards associated with the engineering project, and reference models relating to the engineering project.

The method comprises converting, by the processing unit, the data obtained from the multiple sources into vector representations using a text embedding model.

The method comprises generating, by the processing unit, a prompt to be provided as an input to an Artificial Intelligence (Al) model, by iterating the vector representations of the data obtained from multiple sources.

The method comprises generating, using the AI model, the standardized asset model representing the engineering project based on the generated prompt using similarity clustering and graph normalization, wherein the standardized asset model is a data model comprising at least an information related to the operational parameters of the engineering project.

In one embodiment, the step of generating the standardized asset model comprises segmenting, by the processing unit, the data obtained from multiple sources into multiple groups of data. Further, the step comprises converting, by the processing unit, the data in each of the multiple groups of data into vector representations using the text embedding model. Further, the step comprises generating, by the processing unit, a prompt for each of the groups of data by iterating the vector representations of the data obtained from multiple sources, wherein the prompt is used an input to the AI model. Further, the step comprises generating, using the AI model, a standardized asset model for each of the groups of data based on a set of predefined rules. Finally, the step comprises normalizing, using the AI model, the multiple standardized asset models generated using similarity clustering and graph normalization to obtain a final standardized asset model.

The method comprises continuously acquiring, by the processing unit, real-time operational parameters of the engineering project from at least one controller deployed in the engineering project. The sensors deployed in the engineering project may monitor or record the operational parameters of the engineering project, which is then shared with the controller. The processing unit retrieves the real-time operational parameters from the controller of the engineering project.

The method comprises determining, by the AI model, the key operational parameters of the engineering project influencing the key performance indicators (KPIs) of the engineering project based on the standardized asset model and the real-time operational parameters of the engineering project.

The method comprises mapping, by the processing unit, the determined key operational parameters of engineering project to their corresponding equivalent representations in the application, thereby enabling automatic identification and mapping of relevant key operational parameters of the engineering project.

The method comprises receiving, by the processing unit using the application, an input from the user corresponding to retrieval of operational parameters of the engineering project.

The method comprises displaying, by the processing unit in the application, the KPIs and the operational parameters of the engineering project by retrieving the KPIs and operational parameters from the standardized asset model that are mapped to the input received from the user to facilitate data-driven decision making using the application.

The method further comprises validating the standardized asset model generated based on real-time operation parameters of the engineering project, wherein the real-time operational parameters are compared with input and output parameters of the standardized asset model.

The method comprises receiving, by the processing unit, a query from a user, wherein the query comprises information about the user requirement.

The method comprises processing, by the processing unit, the query received from the user to extract the information about the user requirement. In one embodiment, the processing unit extracts the information about the user requirement from the query received from the user using Natural Language Processing technique.

The method comprises identifying, by the processing unit, the KPIs of the engineering project relating to the user requirement.

The method comprises determining, by the processing unit using the standardized asset model, the key operational parameters influencing the identified KPIs of the engineering project.

The method comprises retrieving, by the processing unit, the equivalent representations of the determined key operational parameters of engineering project in the application.

The method comprises analyzing, by the processing unit, an automation code executed on the controller of the engineering project.

The method comprises determining, by the processing unit, the operational parameters of the engineering project from the automation code.

The method comprises determining, by the processing unit, sequence of the process based on the occurrence of the operational parameters of the engineering project in the automation code.

The method comprises analyzing, by the processing unit using the application, the key operational parameters influencing the KPIs of the engineering project.

The method comprises determining, by the processing unit using the application, the optimum values of the key operational parameters for the desired output of the engineering project.

The method comprises setting, by the processing unit using the controller, key operational parameters of the engineering project to the determined optimum values.

The method comprises training the Artificial Intelligence (Al) model, using the processing unit, on the obtained data pertaining to the engineering project from multiple sources related to the engineering project.

It is an object of the present invention to provide a data processing device for automatic generation of standardized asset model and mapping of operational parameters of an engineering project to an application. The data processing device comprises one or more processing units, and a memory communicatively coupled to the one or more processing units. The memory comprises a module stored in the form of machine-readable instructions executable by the one or more processing units, wherein the module is configured to perform the method steps as stated above.

It is an object of the present invention to provide a system for automatic generation of standardized asset model and mapping of operational parameters of an engineering project to an application. The system comprises an engineering project, a data processing device, and a controller. The engineering project comprises an operational technology (OT) network and an information technology (IT) network. The data processing device is configured to automatically generate a standardized asset model and map the operational parameters of an engineering project to an application running on the IT network. The controller is communicatively connected with the data processing device, wherein the controller is configured to control the operational parameters of the engineering project.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system 100 for automatic generation of standardized asset model and mapping of operational parameters of an engineering project 100a to an application 116, in accordance with an embodiment;
- FIG 2: illustrates the data processing device 110, in accordance with an embodiment of the present invention;
- FIG 3: illustrates the sources of data provided as an input to the AI model 208, in accordance with an embodiment of the present invention;
- FIG 4: is a flowchart 400 of a method for automatic generation of a standardized asset model and mapping of operational parameters of an engineering project 100a to an application 116, in accordance with an embodiment of the present invention;
- FIG 5: is a flowchart 500 of the step of generating the standardized asset model using the AI model 208, in accordance with an embodiment of the present invention;
- FIG 6: is a flowchart 600 of a method of retrieving representations of operational parameters in the application 116, in accordance with an embodiment of the present invention; and
- FIG 7: is a flowchart 700 of a method of data-driven optimization of the engineering project 100a using the application 116, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

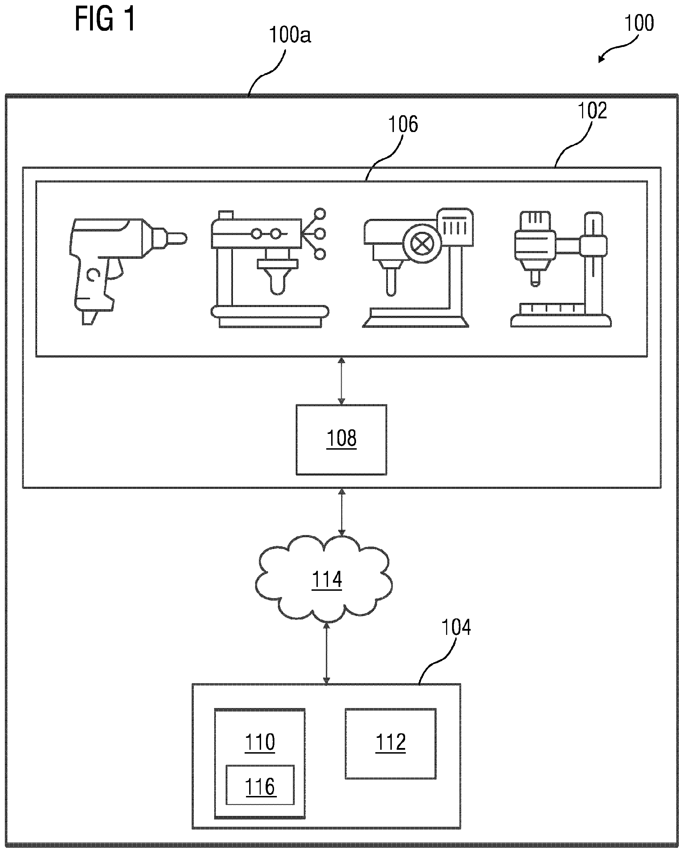

FIG. 1 illustrates a system 100 for automatic generation of standardized asset model and mapping of operational parameters of an engineering project 100a to an application 116, in accordance with an embodiment. The system 100 comprises the engineering project 100a comprising an operational technology (OT) network 102 and an information technology (IT) network 104. The OT network 102 comprises multiple assets 106 such as machine tools, field devices, sensors, or the like. Further, the OT network 102 comprises a controller 108 configured to monitor and control the multiple assets 106 of the OT network 102. The controller 108 may be a control system 100 such as Supervisory Control and Data Acquisition (SCADA) system 100.

The IT network 104 of the engineering project 100a may comprise a data processing device 110, and a remote server 112. The data processing device 110 may be configured to automatically generate a standardized asset model and map the operational parameters of an engineering project 100a to an application 116. The application 116 may be a data analytics application 116 used to make data-driven decisions, and the application 116 may be run on the data processing device 110. In another embodiment, the application 116 may be deployed on any other device that is communicatively connected to the IT network 104.

The OT network 102 and the IT network 104 may communicate with each other using the communication network through an appropriate firewall. The communication network 114 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

The data processing device 110 obtains the data pertaining to the engineering project 100a from multiple sources related to the engineering project 100a. Further, the data processing device 110 processes the data using an Al model 208 to generate a standardized asset model of the engineering project 100a. Further, the data processing device 110 determines the key operational parameters influencing the KPIs of the engineering project 100a based on the real-time operational parameters and the standardized asset model. The Al model 208 further maps the determined key operational parameters of engineering project 100a in the standardized asset model to the corresponding equivalent representations in the application 116. Thus, the data processing device 110 automatically defines a relationship between representations of operational parameters in the application 116 with the operational parameters of the engineering project 100a.

The remote server 112 may be deployed in the IT network 104 and may be configured to train the Al model 208 for automatic generation of the standardized asset model and mapping the operational parameters of an engineering project 100a to an application 116.

In one embodiment, the Al model 208 may comprise generative Al models, particularly large language models (LLMs), integrated with retrieval-augmented generation (RAG) architectures.

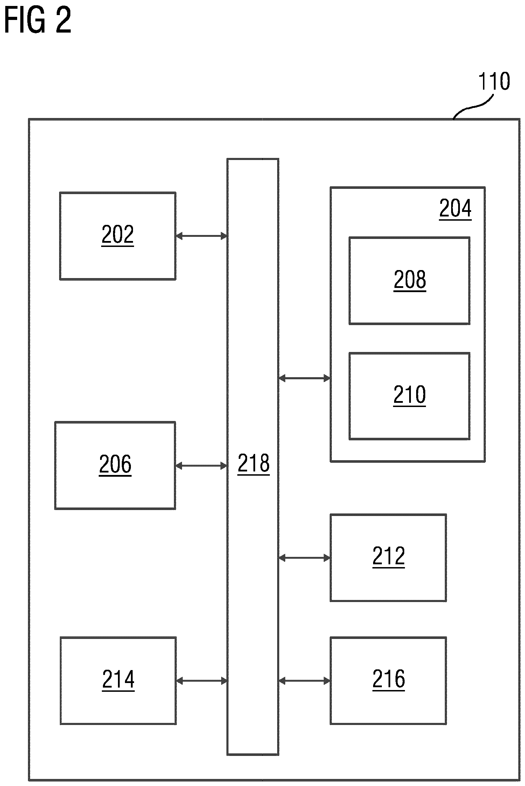

FIG. 2 illustrates the data processing device 110, in accordance with an embodiment of the present invention. The data processing device 110 comprises a processing unit 202, a memory 204, a database 206, a network interface 212, an input unit 214, an output unit 216, and a bus 218.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include a module stored in the form of machine-readable instructions executable by the one or more processing unit 202. The memory may include multiple modules such as AI model 208, and an analytics module 210. The modules interact with each other for automatic generation of a standardized asset model and mapping of operational parameters of an engineering project 100a to an application 116.

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as the operations required for generating recommendations for optimizing a process. The database 206 may store historical data of operational parameters comprising control variables and critical parameters associated with the process in the form of tables or structured knowledge graphs and that may be copied to memory for use by the processing unit 202 during the execution of the computer-executable instructions. Moreover, output data generated as a result of execution of the computer-executable instructions by the processing unit 202 may be stored initially in memory and may ultimately be copied to the database for non-volatile storage.

More specifically, the database is configured to access the memory; and one or more program module, applications, engines, managers, computer-executable code, scripts, or the like such as, for example, the various modules of the memory such as AI model 208, and the analytics module 210. Any of the components depicted as being stored in the database may include any combination of software, firmware, and/or hardware. The software and/or firmware may include computer-executable instructions (e.g., computer-executable program code) that may be loaded into the memory for execution by one or more of the processing units 202 to perform any of the corresponding operations described earlier.

The processing unit 202 may be configured to access the memory and execute computer-executable instructions loaded therein. For example, the processing unit 202 may be configured to execute computer-executable instructions of the various program module, applications, engines, managers, or the like of the AI model 208, and the analytics module 210 to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 may be capable of supporting any of a variety of instruction sets.

The processing unit 202 is configured to obtain the data pertaining to the engineering project 100a from multiple sources related to the engineering project 100a. The multiple sources of data include at least a database, a documentation, or a field device.

Further, the processing unit 202 converts the data obtained from the multiple sources into vector representations using a text embedding model, wherein the text embedding models are designed to convert text from the data into numerical vectors, which can then be used for various natural language processing.

The processing unit 202 is configured to generate a prompt to be provided as an input to an Artificial Intelligence (Al) model, by iterating the vector representations of the data obtained from multiple sources. Iteration of vectors typically refers to the process of repeatedly processing or refining the vector representations of data. This is done to improve the quality or relevance of the data before it is used for further tasks, such as generating a prompt for an AI model 208.

The processing unit 202 is configured to generate, using the AI model 208, the standardized asset model representing the engineering project 100a based on the generated prompt using similarity clustering and graph normalization. The standardized asset model is a data model comprising at least an information related to the operational parameters of the engineering project 100a.

Further, the processing unit 202 is configured to map the operational parameters of the engineering project 100a in the standardized asset model to their corresponding representations in the application 116. As an example, in a thermal power plant, the temperature of the boiler may be represented in the SCADA system 100 in a particular format. The AI model 208 standardizes all such operational parameters in the standardized asset model. Further, in a data analytics application 116, the temperature of the boiler may be represented in a different format. The AI model 208 identifies the temperature of the boiler parameter in the standardized asset model and maps it to the corresponding boiler temperature parameter in the data analytics application 116. Thus, the standardized asset model enables retrieving relevant operational parameters and mapping them to their corresponding representations in the application 116.

The input unit 214 and the output unit 216 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 212 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 218 may include at least one of a system 100 bus, a memory bus, an address bus, or a message bus, and may permit the exchange of information (e.g., data (including computer-executable code), signaling, etc.) between various components of the data processing device 110. The bus may include, without limitation, a memory bus or a memory controller, a peripheral bus, an accelerated graphics port, and so forth.

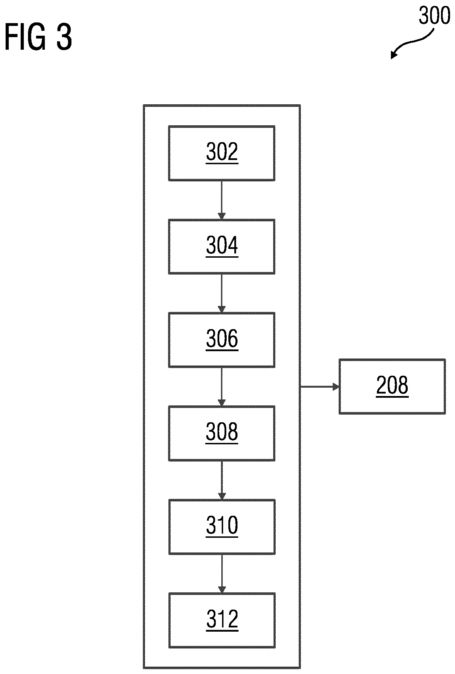

FIG. 3 illustrates the sources of data provided as an input to the AI model 208, in accordance with an embodiment of the present invention. As depicted in the figure, the multiple sources of data 300 include sensors 302 deployed in the engineering project 100a, actuators 304, documentation 306 corresponding to the engineering project 100a, ISA standards 308, reference models 310 of engineering project 100as, and assets 312 such as machinery. Data from these multiple sources are used to train the AI model 208 to automatically generate the standardized asset model of the engineering project 100a. In one embodiment, the AI model 208 may be deployed on a remote server 112 and trained on the remote server 112.

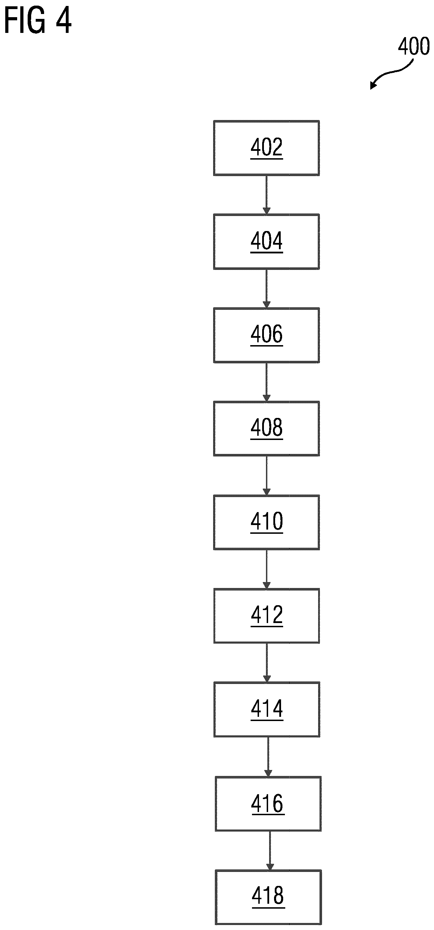

FIG. 4 is a flowchart 400 of a method for automatic generation of a standardized asset model and mapping of operational parameters of an engineering project 100a to an application 116, in accordance with an embodiment of the present invention. At step 402, the data pertaining to the engineering project 100a is obtained by the processing unit 202 from multiple sources related to the engineering project 100a.

The multiple sources of data may include documentation comprising information relating to the engineering project 100a, field devices measuring real-time operational parameters of the engineering project 100a, repository comprising historical data associated with the engineering project 100a, predefined standards associated with the engineering project 100a, and reference models relating to the engineering project 100a.

At step 404, the data obtained from the multiple sources is converted into vector representations by the processing unit 202 using a text embedding model. The text embedding model is configured to transform the text from the data into numerical vectors. Conversion of text into numerical vectors enables in understanding the underlying semantics of the text using natural language processing techniques.

At step 406, a prompt to be provided as an input to an Artificial Intelligence (Al) model is generated by the processing unit 202 by iterating the vector representations of the data obtained from multiple sources. Iterating may involve system 100atically processing and refining vector representations through multiple steps or cycles to obtain a prompt.

At step 408, the standardized asset model representing the engineering project 100a is generated using the AI model 208 by providing the generated prompt as an input to the AI model 208. The standardized asset model is a data model comprising at least an information related to the operational parameters of the engineering project 100a.

At step 410, the real-time operational parameters of the engineering project 100a is continuously acquired by the processing unit 202 from at least one controller 108 deployed in the engineering project 100a. The controller 108 is communicatively connected to the field devices such as sensors that monitors and records the operational parameters of the engineering project 100a. As an example, the sensors may measure the parameters such as temperature, pressure, motor speed so on and so forth.

At step 412, the key operational parameters of the engineering project 100a influencing the key performance indicators (KPIs) of the engineering project 100a are determined by the AI model 208 based on the standardized asset model and the real-time operational parameters of the engineering project 100a. The AI model 208 analyses the real-time operational parameters, KPIs and the standardized asset model to determine the effect of each of the operational parameters on the KPIs. Further, the AI model 208 identifies the key operational parameters that has greater impact on the KPIs of the engineering project 100a.

At step 414, the identified key operational parameters of engineering project 100a in the standardized asset model are mapped to the corresponding equivalent representations in the application 116 using the AI model 208. Therefore, automatic identification and mapping of relevant key operational parameters of the engineering project 100a to the application 116 is enabled. The AI model 208 analyses the representations of the operational parameters in the application 116 and further analyses the operational parameters of the standardized asset model and maps the key operational parameters of the engineering project 100a to the corresponding representations in the application 116 based on the similarity. Thus, an accurate mapping of data is achieved using the proposed method.

At step 416, an input is received by the processing unit 202 from the user, wherein the input relates to retrieval of operational parameters of the engineering project 100a. For example, the input may be in the form of text query related to a representation of operational parameters in the application 116. For example, the user may select a parameter such as "boiler temperature" in the application 116.

At step 418, the KPIs and the operational parameters of the engineering project 100a are displayed in the application 116 by retrieving the KPIs and operational parameters from the standardized asset model that are mapped to the input received from the user. The displayed operational parameters and KPIs are used to facilitate data-driven decision making using the application 116.

In one embodiment, the method comprises the step of validating the generated standardized asset model using on real-time operation parameters of the engineering project 100a, wherein the real-time operational parameters are compared with input and output parameters of the standardized asset model. This step ensures that the standardized asset model accurately represents the engineering project 100a.

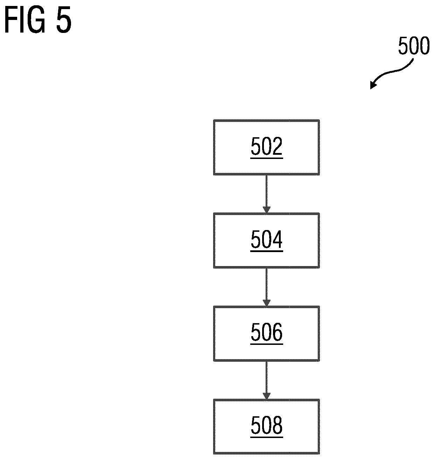

FIG. 5 is a flowchart 500 of the step of generating the standardized asset model using the AI model 208, in accordance with an embodiment of the present invention. At step 502, the data obtained from multiple sources are segmented into multiple groups of data by the processing unit 202. The data may be grouped into multiple groups based on a predetermined size of the groups.

At step 504, the data in each group of data is converted into vector representations using the text embedding model. The text embedding model transforms the textual data into numerical vector representations for further processing. The vector representations of each group may be stored in a vector embedding database.

At step 506, a prompt is generated by the processing unit 202 for each of the groups of data by iterating the vector representations of the data obtained from multiple sources. The prompt is generated to be used as an input to the AI model 208.

At step 508, a standardized asset model is generated using the AI model 208 for each of the groups of data based on a set of predefined rules. The prompt that is generated for each group is provided as an input to the AI model 208 for generating the standardized asset model.

At step 510, the standardized asset models generated for the groups of data are normalized using similarity clustering and graph normalization technique to obtain a final standardized asset model.

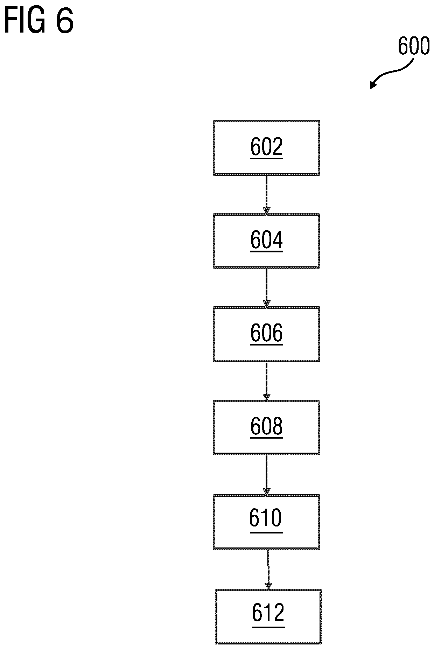

FIG. 6 is a flowchart 600 of a method of retrieving representations of operational parameters in the application 116, in accordance with an embodiment of the present invention. At step 602, a query is received by the processing unit 202 from the user, wherein the query may be text comprising information about the user requirement.

At step 604, the query received from the user is processed by the processing unit 202 to extract the information about the user requirement. The processing unit 202 may use natural language processing technique to understand the underlying semantics of the query and thereby deriving the user requirement.

At step 606, the KPIs of the engineering project 100a relating to the user requirement are identified by the processing unit 202 using the AI model 208.

At step 608, the key operational parameters influencing the identified KPIs of the engineering project 100a are determined by the processing unit 202 using the AI model 208. The AI model 208 analyses the standardized asset model to determine the key operational parameters corresponding to the user requirements.

At step 610, the equivalent representations of the determined key operational parameters of engineering project 100a are retrieved from the standardized asset model by the processing unit 202 using the AI model 208. In other words, the AI model 208 determines the key operational parameters and KPIs corresponding to the user requirements and further identifies equivalent key operational parameters and KPIs that are mapped in the standardized asset model. The AI model 208 then retrieves the relevant key operational parameters and KPIs related to the user requirements from the standardized asset model.

At step 612, the key operational parameters, KPIs of the engineering project 100a, and corresponding representations of the key operational parameters and KPIs in the application 116 are displayed in the application 116.

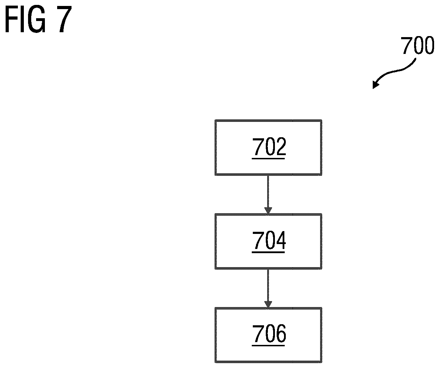

FIG. 7 is a flowchart 700 of a method of data-driven optimization of the engineering project 100a using the application 116, in accordance with an embodiment of the present invention. At step 702, the key operational parameters influencing the KPIs of the engineering project 100a are analyzed by the processing unit 202 using the application 116. The key operational parameters and KPIs that are retrieved based on the user requirements are analyzed by the application 116. The analytics module 210 may employ data analyses techniques to process the identified key operational parameters and KPIs.

At step 704, the optimum values of the key operational parameters for a desired output of the engineering project 100a are determined by the processing unit 202 using the application 116. The application 116 may be data analytics application 116 that applies data analyses techniques to determine the optimum key operational parameters of the engineering project 100a.

At step 706, the key operational parameters of the engineering project 100a are set to the determined optimum values using the controller 108. The processing unit 202 communicates the optimum values of key parameters to the controller 108 of the engineering project 100a which then adjusts the key operational parameters to the determined optimum values. Thus, the processes of the engineering project 100a are optimized using the application 116.

In one embodiment, the method automatically determines the sequence of process in the engineering project 100a based on the automation code. The method comprises analyzing the automation code that is executed on the controller 108 of the engineering project 100a by the processing unit 202. Subsequently, the operational parameters of the engineering project 100a are determined by the processing unit 202 from the automation code. Finally, the processing unit 202 determines the sequence of the process in the engineering project 100a based on the occurrence of the operational parameters of the engineering project 100a in the automation code.

An example implementation of the present invention is detailed herein. Consider an engineering project 100a such as a glass manufacturing plant, where raw materials undergo a series of physio-chemical processes before being converted into the final glass product. This engineering project 100a utilizes both an Operational Technology (OT) network and an Information Technology (IT) network, which communicate with each other through a secure communication network and a firewall.

The OT network 102 includes essential elements typically deployed on the shop floor, such as sensors that measure various physical parameters like temperature, pressure, and humidity, and actuators that perform actions based on sensor inputs, such as opening a valve or adjusting a motor. It also includes Supervisory Control and Data Acquisition (SCADA) systems used for real-time monitoring and control of processes, Human-Machine Interfaces (HMI) that allow human operators to interact with control systems, and Industrial Networks like Modbus, PROFIBUS, and Ethernet/IP that connect various OT elements.

The IT network 104 comprises various system and applications, including Enterprise Resource Planning (ERP) systems that manage business processes across the organization such as inventory, procurement, and human resources, Customer Relationship Management (CRM) systems that manage interactions with customers and store related data, and data analytics applications used to process operational parameters and make data-driven decisions to optimize the manufacturing process.

In this implementation, a data processing device 110 within the IT network 104 plays a crucial role. This device retrieves the necessary operational parameters by mapping these parameters between the OT and IT networks. For instance, an operational parameter like furnace temperature may be represented in a specific format within the SCADA system 100 and in a different format within the IT systems. The data processing device 110 translates these formats to ensure seamless data integration. When a user submits a requirement through the data analytics application 116, such as optimizing furnace efficiency, the data processing device 110 retrieves the relevant operational parameters. It first receives the requirement from the user, maps the required operational parameters from the OT network 102, and then retrieves these parameters for further processing.

The data processing device 110 also handles various types of data related to the engineering project 100a, including process documentation, reference models, and ISA standards. The processing unit 202 converts this text data into vector representations, which are then stored in a vector embedding database. To generate a standardized asset model, the processing unit 202 creates a prompt, which is inputted into an AI model 208. This AI model 208 generates a comprehensive standardized asset model of the glass manufacturing plant, detailing information about plant assets 106, operational parameters, and more.

For example, if the data analytics application 116 requests operational parameters related to furnace efficiency, the processing unit 202 uses the AI model 208 to retrieve key parameters from the standardized asset model. These parameters are then processed by the data analytics application 116 to optimize furnace efficiency. Thus, the present invention facilitates data-driven decision-making to optimize processes in an engineering project 100a. By integrating the OT and IT network and utilizing advanced data analytics and AI model 208, the system 100 ensures efficient and effective management of manufacturing processes. This integration not only enhances operational efficiency but also provides a robust framework for continuous improvement in industrial settings.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for automatic generation of standardized asset model and mapping of operational parameters of an engineering project to an application
100a - Engineering project
102 - OT network
104 - IT network
106 - Assets
108 - Controller
110 - Data processing device
112 - Remote server
114 - Communication network
116 - Application
202 - Processing unit
204 - Memory
206 - Database
208 - AI model
210 - Analytics module
212 - Network interface
214 - Input unit
216 - Output unit
218 - Bus
300 - sources of data provided as an input to the AI model
400 - flowchart of a method for automatic generation of a standardized asset model and mapping of operational parameters of an engineering project
500 - flowchart of the step of generating the standardized asset model using the AI model
600 - flowchart of a method of retrieving representations of operational parameters in the application
700 - flowchart of a method of data-driven optimization of the engineering project using the application

## Claims

1. A method for automatic generation of a standardized asset model and mapping of operational parameters of an engineering project (100a) to an application (116), wherein the method comprises:
obtaining, by a processing unit (202), the data pertaining to the engineering project (100a) from multiple sources related to the engineering project (100a), wherein the sources include at least a database, a documentation, or a field device;
converting, by the processing unit (202), the data obtained from the multiple sources into vector representations using a text embedding model;
generating, by the processing unit (202), a prompt to be provided as an input to an Artificial Intelligence (Al) model (208), by iterating the vector representations of the data obtained from multiple sources;
generating, using the AI model (208), the standardized asset model representing the engineering project (100a) by providing the generated prompt as an input to the AI model (208), wherein the standardized asset model is a data model comprising at least an information related to the operational parameters of the engineering project (100a);
continuously acquiring, by the processing unit (202), real-time operational parameters of the engineering project (100a) from at least one controller (108) deployed in the engineering project (100a);
identifying, by the AI model (208), the key operational parameters of the engineering project (100a) influencing the key performance indicators (KPIs) of the engineering project (100a) based on the standardized asset model and the real-time operational parameters of the engineering project (100a);
mapping, by the AI model (208), the identified key operational parameters of engineering project (100a) in the standardized asset model to the corresponding equivalent representations in the application (116), thereby enabling automatic identification and mapping of relevant key operational parameters of the engineering project (100a);
receiving, by the processing unit (202) using the application (116), an input from the user corresponding to retrieval of operational parameters of the engineering project (100a); and
displaying, by the processing unit (202) in the application (116), the KPIs and the operational parameters of the engineering project (100a) by retrieving the KPIs and operational parameters from the standardized asset model that are mapped to the input received from the user to facilitate data-driven decision making using the application (116).

2. The method according to claim 1, wherein the method comprises validating the generated standardized asset model using on real-time operation parameters of the engineering project (100a), wherein the real-time operational parameters are compared with input and output parameters of the standardized asset model.

3. The method according to any of the preceding claims, wherein the multiple sources from which the data pertaining to the engineering project (100a) is obtained includes:
documentation comprising information relating to the engineering project (100a);
field devices measuring real-time operational parameters of the engineering project (100a);
repository comprising historical data associated with the engineering project (100a);
predefined standards associated with the engineering project (100a); and reference models relating to the engineering project (100a).

4. The method according to any of the preceding claims, wherein the method comprises:
receiving, by the processing unit (202), a query from a user, wherein the query comprises information about the user requirement;
processing, by the processing unit (202), the query received from the user to extract the information about the user requirement;
identifying, by the processing unit (202) using the AI model (208), the KPIs of the engineering project (100a) relating to the user requirement;
determining, by the processing unit (202) using the AI model (208), the key operational parameters influencing the identified KPIs of the engineering project (100a) based on the standardized asset model;
retrieving, by the processing unit (202) using the AI model (208), the determined key operational parameters of engineering project (100a) from the standardized asset model corresponding to the user requirement; and
displaying, in the application (116), the key operational parameters, KPIs of the engineering project (100a), and corresponding representations of the key operational parameters and KPIs in the application (116) based on the provided user requirement.

5. The method according to any of the preceding claims, wherein the processing unit (202) extracts the information about the user requirement from the query received from the user using Natural Language Processing technique.

6. The method according to any of the preceding claims, wherein method comprises:
analyzing, by the processing unit (202), an automation code executed on the controller (108) of the engineering project (100a);
determining, by the processing unit (202), the operational parameters of the engineering project (100a) from the automation code; and
determining, by the processing unit (202), the sequence of the process in the engineering project (100a) based on the occurrence of the operational parameters of the engineering project (100a) in the automation code.

7. The method according to any of the preceding claims, wherein the method comprises:
analyzing, by the processing unit (202) using the application (116), the key operational parameters influencing the KPIs of the engineering project (100a);
determining, by the processing unit (202) using the application (116), the optimum values of the key operational parameters for a desired output of the engineering project (100a); and
setting, by the processing unit (202) using the controller (108), the key operational parameters of the engineering project (100a) to the determined optimum values.

8. The method according to any of the preceding claims, wherein the method comprises training the Artificial Intelligence (Al) model (208), using the processing unit (202), on the obtained data pertaining to the engineering project (100a) from multiple sources related to the engineering project (100a).

9. The method according to any of the preceding claims, wherein generating the standardized asset model comprises:
segmenting, by the processing unit (202), the data obtained from multiple sources into multiple groups of data;
converting, by the processing unit (202), the data in each group of data into vector representations using the text embedding model;
generating, by the processing unit (202), a prompt for each of the groups of data by iterating the vector representations of the data obtained from multiple sources,
wherein the prompt is used as an input to the AI model (208);
generating, using the AI model (208), a standardized asset model for each of the groups of data based on a set of predefined rules; and
normalizing, by the AI model (208), the multiple standardized asset models using similarity clustering and graph normalization techniques to obtain a final standardized asset model.

10. A data processing device (110) for automatic generation of standardized asset model and mapping of operational parameters of an engineering project (100a) to an application (116), wherein the data processing device (110) comprises:
one or more processing units (202); and
a memory (204) communicatively coupled to the one or more processing units (202), the memory (204) comprising a module stored in the form of machine-readable instructions executable by the one or more processing units (202), wherein the module is configured to perform the method steps according to claims 1 to 9.

11. A system (100) for automatic generation of standardized asset model and mapping of operational parameters of an engineering project (100a) to an application (116), wherein the system (100) comprises:
the engineering project (100a) comprising an operational technology (OT) network (102) and an information technology (IT) network (104);
a communication network (114) enabling bidirectional communication between the OT network (102) and the IT network (104);
a data processing device (110) for automatic generation of standardized asset model and mapping of operational parameters of an engineering project (100a) to an application (116) according to claim 10; and
a controller (108) communicatively connected with the data processing device (110), wherein the controller (108) is configured to control the operational parameters of the engineering project (100a).

12. A computer-program product, having computer-readable instructions stored therein, that when executed by a processing unit (202), cause the processing unit (202) to perform method steps according to any of the claims 1 to 9.

13. A computer readable medium on which program code sections of a computer program are saved, the program code sections being loadable into and/or executable in a system (100) to make the system (100) execute the method steps according to any of the claims 1 to 9 when the program code sections are executed in the system (100).
